# EUROPÄISCHE PATENTSCHRIFT

(11) **EP 2 807 045 B1**
(45) Veröffentlichungstag und Bekanntmachung des Hinweises auf die Patenterteilung: **21.10.2015**
(21) Anmeldenummer: 13718289.5
(22) Anmeldetag: 23.01.2013
(51) Int. Cl.: B60H 1/00, F25B 45/00, F25B 49/00, B67D 7/02, F28F 27/00

(54) **VERFAHREN ZUR VERMEIDUNG UND ERKENNUNG VON KÄLTEMITTELAUSTRITTEN AUS KOMPLEXEN HYDRAULISCHEN SYSTEMEN**
METHOD FOR PREVENTING AND RECOGNISING COOLANT DISCHARGES FROM COMPLEX HYDRAULIC SYSTEMS
PROCÉDÉ POUR EMPÊCHER ET IDENTIFIER DES FUITES DE RÉFRIGÉRANT DANS DES SYSTÈMES HYDRAULIQUES COMPLEXES

(30) Priorität: 27.01.2012 DE 102012001906
(43) Veröffentlichungstag der Anmeldung: 03.12.2014
(73) Patentinhaber: Dürr Somac GmbH, 09366 Stollberg (DE)
(72) Erfinder: NEUBERT, Dieter, 09427 Ehrenfriedersdorf (DE); DIETEL, Dany, 09569 Oederan (DE); ULBRICHT, Olaf, 09221 Neukirchen (DE); GRIMM, Andre, 08233 Treuen (DE); ACHATZ, Thomas, 09366 Niederdorf (DE); WIELAND, Frank, 09235 Burkhardtsdorf (DE)
(74) Vertreter: Patentanwälte Findeisen & Neumann
(86) Internationale Anmeldenummer: PCT/DE2013/000050
(87) Internationale Veröffentlichungsnummer: WO 2013/110265

(56) Entgegenhaltungen:
- EP-A2- 0 936 417
- WO-A1-2011/088831
- US-A- 4 711 096

## Beschreibung

An Montagelinien der Automobilindustrie werden Fahrzeugklimasysteme (MAC's mobil air conditions') mit Kältemittel befüllt. Diese Befüllung wird durch Befüllanlagen vorgenommen, welche den gesamten Befüllprozess in Adaption zum Fahrzeugklimasystem automatisch ermöglichen. Die verwendeten Kältemittel belasten einerseits die Umwelt, sind teilweise brennbar und bilden oft gefährliche Zersetzungsprodukte. Aus diesem Grund ergeben sich hohe sicherheitstechnische Anforderungen an die Dichtheit solcher Befüllanlagen, damit das Entweichen von Kältemitteln ausgeschlossen bzw. diagnostiziert werden kann.

Da es sich bei Kältemitteln um verflüssigte Gase handelt, müssen Aggregatzustände und Drucklagen berücksichtigt werden. Speziell muss einem temperaturbedingten Druckanstieg in den Leitungen und Betriebsmitteln solcher Befüllanlagen konstruktiv Rechnung getragen werden. Auch eine im Havariefall freigesetzte Menge an Kältemittel soll begrenzt werden, um Gefahren hinsichtlich gefährlicher explosiver Atmosphäre zu vermeiden oder klein zu halten. Befüllanlagen sind gekennzeichnet durch einen integrierten Vakuum- und Befüllkreis, mit Sensorik für Vakuum- , Druck- und Massebestimmung, einer Medienversorgungsstrecke, die aus Flaschen oder Tanks bedient wird, einer Adaptionsvorrichtung zum Anschluss an die Befüllschnittstelle im Fahrzeug sowie einem Steuerungssystem, welches den automatischen Befüllablauf initiiert. Die Funktionen Drucktest, Evakuierung, Lecktest, Nachevakuierung, Befüllung und Kältemittelrücksaugung sind kombinierbare Teilfunktionen eines typischen Gesamtprozesses. Der Prozess wird überwiegend an Montagelinien im Nacharbeitsbereich, in Try out Bereichen und in der Fahrzeugentwicklung durchgeführt.

In US 4 711 096 A wird ein Verfahren gemäß Oberbegriff des Anspruchs 1 beschrieben zur Vermeidung und Erkennung von Kältemittelaustritten aus komplexen hydraulischen Systemen, wobei ein Kältemittel führender Kreislauf in kleine Volumina aufgeteilt wird, die über als Verschließventil und Sicherheitsventil ausgeführte Dreiwegeventile verfügen. Mit einem integrierbaren Drucksensor kann eine Leckerkennungsdiagnose so durchgeführt werden, dass notwendige Explosionsschutzmaßnahmen und auch Einschränkungen im Arbeitsumfeld der Befüllung weitgehend reduziert werden können.

Aufgabe der Erfindung ist es, ein Verfahren zum Betrieb von Befüllanlagen für Kältemittel zu schaffen, das insbesondere folgende Anforderungen erfüllt:
1. Begrenzen der Austrittsmengen von Kältemittel im Fehler- bzw. Havariefall
2. Vermeidung und Begrenzung gefährlicher explosiver Atmosphären bei brennbaren oder umwelt- oder gesundheitsschädigender Kältemittel
3. Schutz hydraulischer Kreisläufe vor zu hohen Drucklagen
4. Vermeidung des Austritts von Kältemittel aus Sicherheitsventilen
5. Diagnose von Undichtheiten

Diese Aufgabe wird mit den technischen Merkmalen gemäß Anspruch 1 sowie vorteilhaften Ausgestaltungen gemäß den Unteransprüchen gelöst, wobei als wesentliche Merkmale und Vorteile insbesondere zu nennen sind:
Das erfindungsgemäße Verfahren zur Vermeidung und Erkennung von Kältemittelaustritten aus komplexen hydraulischen Systemen ist dadurch gekennzeichnet, dass ein Kreislauf, der Kältemittel führt, in jeweils kleine Volumen (sog. Cluster) aufgeteilt wird, die über Verschließventile und ein Sicherheitsventil verfügen. Dabei kann mittels eines integrierbaren Drucksensors in einfacher Weise eine Leckerkennungsdiagnose durchgeführt werden. Im Ergebnis können notwendige Explosionsschutzmaßnahmen sowie bisher notwendige Einschränkungen im Arbeitsumfeld der Befüllung reduziert werden.

Ein Ansprechen der Sicherheitsventile wird vermieden, indem Druck bzw. Volumen in einen von allen Clustern genutzten Speicher abgebaut wird und indem die Cluster voneinander mit Rückschlagventilen entkoppelt sind. Die entsprechend ausgestalteten Cluster - die anhand der Zeichnung noch näher erläutert werden - können in die Hydraulik der Befüllanlage integriert werden. Ebenso ist es möglich, dass diese Cluster ein Bestandteil der Hydraulik zur Gestaltung der Funktionen des Gesamtprozesses sind.

Mit Hilfe der Druckmesstechnik in den einzelnen Clustern kann sowohl während des Betriebs der Befüllanlage im Befüllprozess selbst als auch in der Betriebszeit und darüber hinaus eine kontinuierliche Leckdiagnose durchgeführt werden.

Weiterhin kann durch eine Umsetzung der auf Seite -1- benannten Anforderungen gemäß den Punkten 1 bis 5 erreicht werden, dass technisch dichte Systeme mit den genannten zusätzlichen Maßnahmen den Zustand "dauerhaft dicht" erreichen. Gleichzeitig ergeben sich für Befüllanlagen, die mit diesen Merkmalen ausgestattet wurden, geringere Anforderungen an die noch zu tätigende Explosionsschutzmaßnahmen.

Ein weiterer Vorteil dieses Verfahrens besteht darin, dass mittels der Druckmesstechnik gegenüber zusätzlich verbauter Gaswarnsensorik in Verbindung mit Absaugungen eine sensiblere Leckdetektierung erreichbar ist, weil die eigentliche Gaswarntechnik durch die Luftwechselraten negativ beeinflusst wird.

Schließlich können eine regelmäßige Leckdetektierung mit Druckmesstechnik in Verbindung mit Lüftungstechnik und Gaswarnsensorik einen Teil von Maßnahmen bilden, mit deren Hilfe technisch dichte Systeme zu dauerhaft technischen Systemen umgestuft werden können. Dadurch ergeben sich für den Betreiber Betriebskostenvorteile, beispielsweise Durchführung einer Fehlersuche bei geöffneten Türen und laufender Anlage.

Wesentliche Vorteile des Verfahrens insgesamt sind somit die Vermeidung und Begrenzung der Entstehung gefährlicher explosiver Atmosphären in Arbeitsbereichen sowie die Reduzierung von Maßnahmen aus sonst üblichen Anforderungen aus Ex- Zonen bzw. die Reduzierung dieser. Weiterhin behindern die Anforderungen, die an das Verfahren gestellt werden, den eigentlichen Befüllprozess nicht und die erforderlichen Komponenten können direkt in die hydraulischen Kreisläufe der Befüllanlage integriert werden bzw. sogar einen funktionell bestimmten Bestandteil bilden.

Nachfolgend wird ein Ausführungsbeispiel unter Bezugnahme auf die Zeichnung erläutert: Die Kleinhaltung der Austrittsmengen von Kältemittel im Fehler- bzw. Havariefall mit den Anforderungen gemäß Punkt 1 und 2 wird durch eine Clusterung von Kältemittel führenden hydraulischen Systemen in kleine Volumen realisiert.

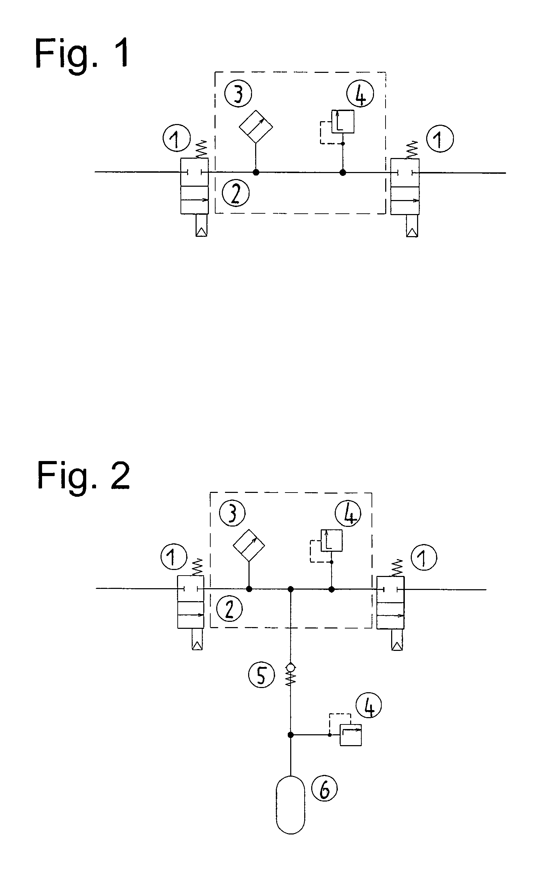

Fig. 1 zeigt ein derartiges nicht erfindungsgemäßes Cluster 2. Es besteht aus Leitungen mit Betriebsmitteln und wird durch zwei Ventile 1 von der restlichen Hydraulik im Fehler- oder Havariefall abgetrennt. Ein Sicherheitsventil 4 verhindert unzulässig hohe Drücke in diesem Cluster 2 und erfüllt somit die Anforderungen gemäß Punkt 3.

Wenn derartige Hydraulikcluster im Fehler- oder Havariefall geschlossen werden oder auch bei ausgeschalteter Befüllanlage geschlossen sind, ergibt sich bei Erhöhung der Umgebungstemperatur oder auch im Betriebsfall durch Volumenverdrängung bei schaltenden Ventilen, das Problem einer Druckerhöhung im Cluster selbst. Da sich das Kältemittel in der Hydraulik in Flüssigphase befindet, haben kleine Temperaturänderungen bzw. Volumenänderungen eine deutliche Druckerhöhungswirkung. Diese führt meist zum Ansprechen des Sicherheitsventils 4.

Eine Erhöhung des Druckes im Cluster 2 nach Fig. 1 erfolgt vor allem bei Temperaturerhöhung langsam, so dass ein Sicherheitsventil 4 langsam öffnet. Der Schließpunkt liegt meist hysteresebehaftet weit unter dem Öffnungsdruck. Das führt zur Freisetzung unkontrollierbarer Mengen an Kältemittel und ist unerwünscht.

Um dies zu vermeiden, wird das erfindungsgemäße Hydraulikcluster nach Fig. 2 um ein Rückschlagventil 5 erweitert. Das Rückschlagventil 5 mündet in ein spezielles Cluster welches einen Blasen- oder Membranspeicher 6 enthält. An dieses Cluster können weitere Cluster angeschlossen werden. Die Rückschlagventile 5 entkoppeln diese Cluster gegenseitig.

Erfolgt nun eine Druckerhöhung im Cluster durch Temperaturanstieg oder Schaltvorgänge werden die entstehenden Druckerhöhungen in den Blasenspeicher abgebaut. Da den genannten Effekten nur kleine Volumen zu Grunde liegen, können diese durch den Speicher 6 aufgenommen werden. Ein Öffnen der Sicherheitsventile erfolgt nur noch bei extremen druckerhöhenden Situationen, die hier nicht berücksichtigt sind. Damit sind auch die Anforderungen aus den Punkten 3 und 4 umgesetzt.

Da sich in den kältemittelführenden Kreisläufen der Befüllanlage Kältemittel in Flüssigphase befindet, führen kleine Lecks schon zu Druckverringerungen, die sich gut mit Drucksensoren 3 detektieren lassen. Die Messzeiten können so gewählt werden, dass der Befüllprozess nicht gestört wird und dass Temperaturschwankungen das Ergebnis der Druckabfallmessung nicht beeinträchtigen. Da jedes Cluster über eine derartige Druckmesstechnik verfügt, können sehr vorteilhaft die Stellen, an denen es zur Undichtheit kommt, diagnostiziert werden. Mit dieser Maßnahme ist somit auch die Anforderung gemäß Punkt 5 umgesetzt.

### Bezugszeichenliste

- 1: Absperrventil
- 2: Cluster
- 3: Drucksensor
- 4: Sicherheitsventil
- 5: Rückschlagventil
- 6: Speicher

## Patentansprüche

1. Verfahren zur Vermeidung und Erkennung von Kältemittelaustritten aus komplexen hydraulischen Systemen, wobei ein Kältemittel führender Kreislauf in Cluster (2) aufgeteilt wird, die über Verschließventile und ein Sicherheitsventil verfügen, wobei mittels eines integrierbaren Drucksensors eine Leckerkennungsdiagnose derart durchgeführt werden kann, dass notwendige Explosionsschutzmaßnahmen und Einschränkungen im Arbeitsumfeld der Befüllung reduziert werden können,
**dadurch gekennzeichnet, dass** ein Ansprechen der Sicherheitsventile (4) vermieden wird, indem Druck / Volumen in einen von allen Clustern (2) genutzten Speicher (6) abgebaut wird und indem die Cluster (2) mit Rückschlagventilen (5) voneinander entkoppelt sind.

2. Verfahren nach Anspruch 1, **dadurch gekennzeichnet,**
**dass** die Cluster (2) in die Hydraulik der Befüllanlage integrierbar sind.

3. Verfahren nach Anspruch 1, **dadurch gekennzeichnet,**
**dass** mittels der Druckmesstechnik in den einzelnen Clustern (2) sowohl während des Betriebs der Befüllanlage im Befüllprozess selbst als auch in der Betriebszeit und darüber hinaus eine kontinuierliche Leckdiagnose durchführbar ist.

4. Verfahren nach Anspruch 1, **dadurch gekennzeichnet,**
**dass** eine regelmäßige Leckdetektierung mit Druckmesstechnik in Verbindung mit Lüftungstechnik und Gaswarnsensorik einen Teil von Maßnahmen bildet, mit Hilfe derer technisch dichte Systeme zu dauerhaft technischen Systemen ausgestaltet werden können.

## Claims

1. A method for preventing and detecting coolant discharges from complex hydraulic systems, wherein a circuit carrying coolant is divided into clusters (2) comprising stop valves and a relief valve, wherein a pressure sensor that can be integrated is used to perform leak detection diagnosis such that required explosion protection measures and restrictions in the working environment of a filling system can be reduced, **characterized in that** activation of the relief valves (4) is avoided **in that** pressure/volume is relieved into an accumulator (6) used by all clusters (2), and **in that** the clusters (2) are decoupled from one another using check valves (5).

2. The method according to claim 1, **characterized in that**
the clusters (2) can be integrated in the hydraulics of the filling system.

3. The method according to claim 1, **characterized in that**
continuous leak diagnosis can be performed using the pressure measuring equipment in the individual clusters (2), both during the operation of the filling system in the filling process itself and during the service life of the system and beyond.

4. The method according to claim 1, **characterized in that**
regular leak detection using pressure measuring equipment in conjunction with ventilation equipment and gas warning sensors may form a part of measures with which technically leak tight systems can be designed to be durably technical systems.

## Revendications

1. Procédé pour empêcher et identifier des fuites de réfrigérant dans des systèmes hydrauliques complexes, où un circuit de réfrigérants est divisé en clusters (2) qui, eux, sont dotés de vannes de fermeture et d'une soupape de sûreté, et où il peut être effectué, grâce à un capteur de pression intégré, un diagnostic d'identification de fuites, ceci de telle sorte que les mesures de protection anti-explosion et les restrictions nécessaires à l'environnement immédiat du travail de remplissage peuvent être réduites,
**caractérisé par le fait qu'**une mise en action des soupapes de sûreté (4) soit empêchée en réduisant la pression / le volume dans un accumulateur (6) qui est utilisé par tous les clusters (2), et en découplant les clusters (2) étant munis de clapets de retenue (5).

2. Procédé suivant la revendication 1, **caractérisé par le fait**
**que** les clusters (2) peuvent être intégrés dans le système hydraulique de l'installation de remplissage.

3. Procédé suivant la revendication 1, **caractérisé par le fait**
**que**, grâce à une technique de mesure de pression installée dans chaque cluster (2), on peut y réaliser, tant lors du fonctionnement de l'installation de remplissage, c'est-à-dire durant le processus de remplissage, que lors du fonctionnement de l'installation et même au-delà, un diagnostic continu d'identification de fuites.

4. Procédé suivant la revendication 1, **caractérisé par le fait**
**que** l'identification périodique de fuites au moyen d'une technique de mesure de pression qui, elle, est complétée par une technique de ventilation et des détecteurs avertisseurs de gaz, constitue une partie de mesures à l'aide desquelles des systèmes techniquement étanches peuvent être conçues en tant que systèmes techniques durables.
